**Europäisches Patentamt**

**European Patent Office**

**Office européen des brevets**

(19)

(11) Numéro de publication : **0 079 812**
**B1**

(12)

# FASCICULE DE BREVET EUROPÉEN

(45) Date de publication du fascicule du brevet :
09.08.89

(21) Numéro de dépôt : 82401960.8

(22) Date de dépôt : 25.10.82

(51) Int. Cl.⁴ : **B 66 C 23/42, B 60 P 3/12**

(54) Véhicule automobile à usage mixte pour remorquage et manutention.

(30) Priorité : 13.11.81 FR 8121260

(43) Date de publication de la demande :
25.05.83 Bulletin 83/21

(45) Mention de la délivrance du brevet :
09.08.89 Bulletin 89/32

(84) Etats contractants désignés :
AT BE CH DE GB IT LI NL SE

(56) Documents cités :
DE–A– 2 046 081
DE–B– 1 031 490
FR–A– 2 242 319
GB–A– 706 041
GB–A– 1 205 739
GB–A– 2 045 186
GB–A– 2 061 193
US–A– 2 481 223
US–A– 2 497 379
US–A– 2 644 595
US–A– 3 313 432
US–A– 3 888 369
US–A– 4 274 791
PATENTS ABSTRACTS OF JAPAN, vol. 2, no. 123, 14
octobre 1978, page 3926 M 78; & JP - A - 53 91 225
(TADANO TEKKOSHO K.K.) 10-08-1978

(73) Titulaire : Legueu, Paul
85, Avenue de Mazy
F-44380 Pornichet (FR)

(72) Inventeur : Legueu, Paul
85, Avenue de Mazy
F-44380 Pornichet (FR)

(74) Mandataire : Rodhain, Claude
Cabinet Rodhain-Genestie 30, rue La Boétie
F-75008 Paris (FR)

Jouve, 18, rue St-Denis, 75001 Paris, France

## Description

La présente invention concerne un véhicule automobile tous terrains du type utilisable pour des opérations de remorquage et de manutention et comportant une plate-forme située en arrière de la cabine du conducteur.

Dans le domaine de l'automobile, on connaît des véhicules dénommés « dépanneuses », dont la fonction est de permettre le dépannage et le remorquage d'un autre véhicule et qui, à cet effet, comportent en général un crochet de remorque fixé à un câble enroulé sur un treuil, solidaire d'une armature du véhicule, et permettant de tracter le véhicule en panne en position relevée ou hissé sur la plate-forme arrière de la dépanneuse. Dans le domaine de la manutention et du levage de charges lourdes, on connaît en outre divers systèmes et notamment des grues de différents types, dont certaines peuvent être installées sur des véhicules lourds, tels des camions. Toutefois, il s'agit en général soit de grues de petite taille s'apparentant plus à des systèmes à palans ou à de petits mâts de charge rotatifs à rotation limitée, soit au contraire de grues de forte capacité et d'un encombrement très important, mais ne présentant qu'une portée de flèche réduite.

Or, il s'est avéré un besoin de véhicules automobiles tous terrains permettant d'assurer ces deux fonctions, à savoir le remorquage de véhicules et le levage de charges, et se caractérisant par des dimensions correspondant à la taille réduite d'un véhicule léger, lui permettant d'être aérotransporté, et par une capacité de manutention de charges lourdes avec des portées de flèche importantes, et ce notamment en vue de leur utilisation en tant que véhicules à fonction mixte faisant partie intégrante d'une famille de véhicules formant une unité de déplacement autonome, par exemple pour des études et recherches dans des zones désertiques.

Le document GB-A-2 045 186 décrit un véhicule tracteur destiné à tirer des remorques et équipé d'une grue ou d'un dispositif de dépannage. Le document précité décrit un véhicule automobile qui est conforme au préambule de la revendication 1 de la présente invention.

Le document FR-A-2 242 319 décrit un ensemble automatique de levage et non de remorquage comportant un support de grue pivotant sur 360° et équipé d'un mât télescopique. Selon ce document, en position horizontale rétractée, le mât prend appui à son extrémité libre sur un support disposé à l'avant sur la cabine dudit ensemble.

Le document JA-A-53-91 225 concerne un dispositif pour envelopper un véhicule devant être remorqué. Selon la figure 1 de ce document, on voit seulement, en vue schématique de profil, un camion dont rien ne laisse voir qu'il s'agit d'un engin tout terrain. Ce camion comporte sur sa plate-forme arrière, une grue qui ne semble pas du type télescopique. On peut supposer que cette grue est relevée au moyen d'un verrin représenté en position transversale entre la grue et la cabine. Le véhicule remorqué est tiré par une barre de remorquage. L'extrémité du mât de la grue est muni d'un moufle accroché.

Le problème précité est résolu à l'aide d'un véhicule automobile du type décrit plus haut grâce au fait qu'il comporte une grue télescopique à fonction mixte de levage/manutention de charges et de dépannage/remorquage de véhicules et qui est réglable entre une première position horizontale rétractée de travail, dans laquelle elle sert d'engin de remorquage, et une seconde position relevée et déployée de travail, dans laquelle elle sert d'engin de manutention.

Ces dispositions permettent au véhicule selon l'invention d'assurer aussi bien des opérations de levage que de remorquage, tout en présentant un encombrement réduit et en ayant une portée de flèche réglable.

En outre, selon l'invention, la grue possède un mât télescopique qui, en position rétractée horizontale, s'étend uniquement sur la longueur de la plate-forme en ne dépassant cette dernière que par son extrémité libre portant un moufle à crochet, et qui, à l'état relevé et déployé, peut pivoter horizontalement sur un angle de 360°.

Comme on le voit, cet agencement confère au véhicule selon l'invention des dimensions réduites tant en hauteur, qu'en longueur (et naturellement en largeur également) lorsque le mât est rétracté, ce qui permet un transport aéroporté dudit véhicule, ainsi qu'une capacité de manœuvre importante radialement et en azimut.

D'autres caractéristiques et avantages de l'invention ressortiront de la description qui va suivre à titre d'exemple non limitatif et en regard des dessins annexés, sur lesquels :

La Fig. 1 représente une vue en perspective arrière du véhicule conforme à l'invention.

La Fig. 2 représente une vue en élévation latérale schématique du véhicule de la Fig. 1, avec le mât de grue dans deux positions de travail.

La Fig. 3 est une vue arrière partielle du véhicule fonctionnant en tant qu'engin de levage et de manutention.

La Fig. 4 est un diagramme des charges pouvant être manipulées par la grue en fonction de la portée réglable de sa flèche.

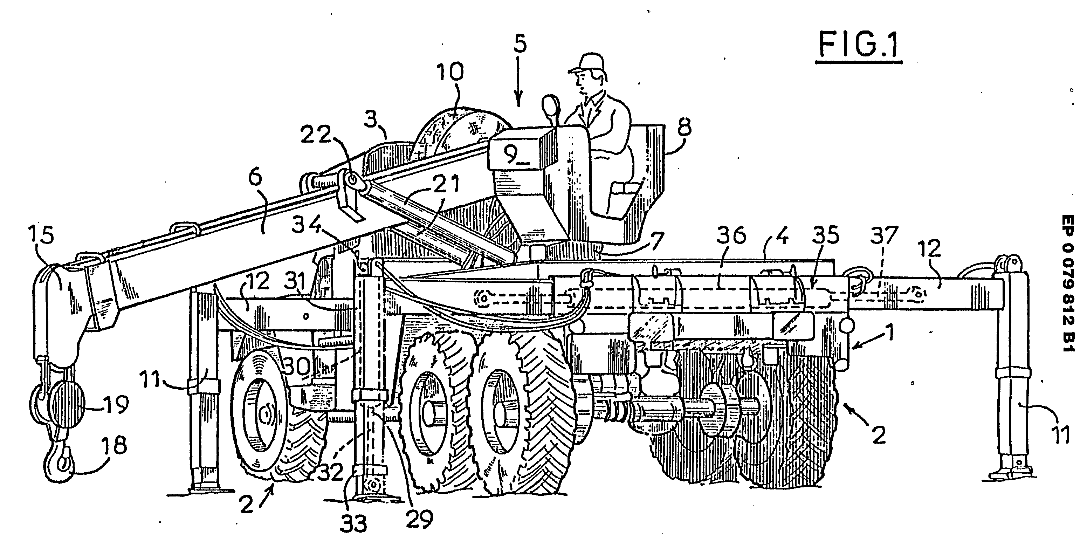

Sur la Fig. 1, on a représenté globalement le véhicule conforme à l'invention, qui se compose d'un châssis 1 classique monté sur des roues 2 et portant une cabine 3 située à l'avant du véhicule et une plate-forme arrière horizontale 4. Cette dernière supporte une grue désignée globalement par la référence 5 et formée d'un mât télescopique 6 pouvant pivoter sur un support de grue 7 fixé à la plate-forme 4 et portant latéralement, d'une part, un siège d'opérateur 8 muni d'un tableau de commande de type classique 9 représenté très schématiquement, et, d'autre part, une roue de secours 10 pour le véhicule. En outre, le véhicule comporte quatre pieds télescopiques latéraux 11, qui sont reliés à des traverses horizontales télescopiques 12 et qui, dans leur état déployé visible sur la Fig. 1, prennent appui sur le sol pour assurer la stabilisation de l'ensemble du véhicule sur le terrain.

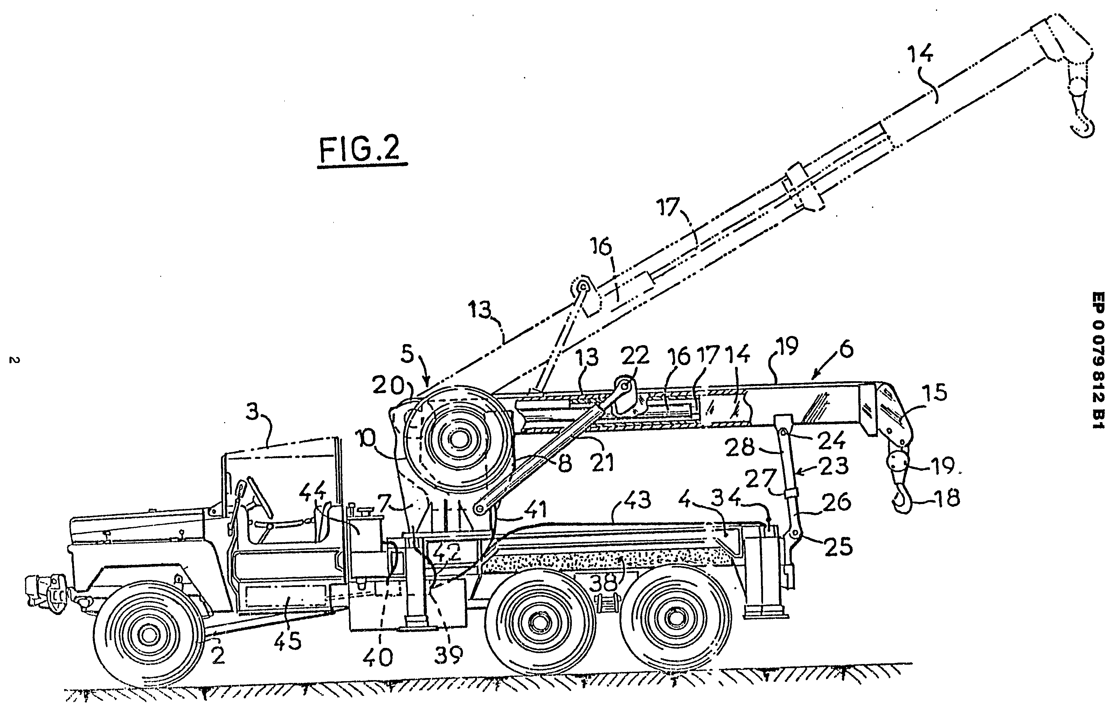

Sur la Fig. 1, la grue 5 est représentée pivotée latéralement d'un certain angle par rapport à l'angle longitudinal du véhicule et dans une position dans laquelle son mât télescopique 6 est rétracté. La Fig. 2 montre la grue 5 ramenée dans l'axe longitudinal du véhicule, dans une position basse, représentée en trait plein, dans laquelle le mât 6 est horizontal et rétracté, et dans une position oblique, représentée en trait mixte, dans laquelle le mât 6 est relevé et déployé. En outre, sur la Fig. 2, les pieds verticaux latéraux 11 sont en position rétractée de non utilisation.

Dans la suite de la description, on se référera indifféremment aux Fig. 1 et 2.

Le mât télescopique 6 de la grue 5 se compose d'une première partie de mât 13 pouvant pivoter sur le support de grue 7 et d'une seconde partie coulissante 14 portant un moufle de levage 15. La partie 14 peut coulisser à l'intérieur de la partie de mât 13 sous l'action d'un vérin hydraulique 16, dont la tige 17 est solidaire de la partie de mât 14, et qui est monté à l'intérieur de la partie 13 de mât 6. Par ailleurs, le moufle 15 supporte un crochet de levage 18 au moyen d'un câble 19 qui est enroulé sur un treuil à commande hydraulique 20 installé sur le support de grue 7.

Comme cela est en outre visible sur les figures, le mât 6 de la grue est relié, à peu près au niveau de sa partie médiane à l'état rétracté, par deux vérins hydrauliques parallèles couplés 21 à la base du support de grue 7, au moyen de liaisons pivotantes, telles que la liaison 22 représentée très schématiquement sur les Fig. 1 et 2. En outre, dans sa position horizontale rétractée (représentée en trait plein sur la Fig. 2), le mât 6 repose, vers son extrémité arrière libre portant le moufle 15, sur deux béquilles ou supports latéraux amovibles 23 sensiblement verticaux disposés des deux côtés du mât 6 et reliés, d'une part, à ce dernier par des articulations en 24 et, d'autre part, à l'arrière de la plate-forme 4 par des articulations 25. Les articulations 24 et 25 sont, par exemple, du type formé d'une patte portant un axe sur lequel peut pivoter chaque support. Par ailleurs les supports 23 sont réglables, par exemple, du type télescopique et se composent d'un élément inférieur 26 pouvant coulisser et être bloqué par tout moyen approprié, repéré par la référence 27 dans un élément supérieur 28 de forme correspondante.

Comme cela a déjà été indiqué, le véhicule selon l'invention comporte également des pieds télescopiques latéraux verticaux 11 contenant chacun intérieurement un vérin hydraulique tel que 29 (Fig. 1) dont le corps 30 est solidaire d'une partie supérieure 31 du pied et dont la tige 32 est solidaire d'une partie inférieure 33 dudit pied 11, qui, elle-même, est solidaire, par exemple, d'un patin horizontal d'appui au sol. Les vérins 29 peuvent être commandés à l'aide de leviers individuels 34, qui déclenchent l'envoi d'un fluide hydraulique de commande auxdits vérins. Les pieds 11 sont fixés des deux côtés du véhicule à des traverses horizontales télescopiques 12 pouvant être déployées et rétractées dans une partie de la structure de la plate-forme 4 au moyen de vérins hydrauliques intérieurs tels que 35 dont le corps 36 est solidaire de la plate-forme et dont la tige 37 est articulée sur la traverse 12.

Pour une meilleure stabilité de l'ensemble du véhicule, ce dernier comporte en outre un lest 38 (Fig. 2) formé d'une couche de béton insérée horizontalement entre le châssis 1 du véhicule et la plate-forme 4.

Ci-après on va décrire le système de commande hydraulique des différents vérins de commande de levage et d'extension du mât 6 de la grue et des différents vérins de commande de réglage des pieds télescopiques 11 et de leurs traverses horizontales 12. Les chambres des vérins 21 de relèvement du mât 6 sont reliées par un distributeur repéré par la référence 39 à une pompe à huile 40 par des canalisations souples 41, tandis que le vérin 16 est relié de façon analogue, non représenté, au distributeur 39 et que les chambres des vérins tels que 29 et 35 sont reliées par des canalisations souples, telles que celles repérées par les références 42 et 43, et par des distributeurs individuels non représentés au distributeur général 39. Un réservoir d'huile 44 installé derrière la cabine 3 du véhicule est raccordé à la pompe à huile 40, qui est elle-même commandée par une prise de mouvement sur la sortie de la boîte de vitesses 45 du moteur (non représenté) de traction du véhicule.

L'utilisation du véhicule selon l'invention est la suivante :

1) Lorsque le mât 6 de la grue est horizontal et rétracté (voir Fig. 1 et Fig. 2, position en trait plein), le mât dépasse l'arrière du véhicule uniquement par son extrémité arrière portant le moufle 15 et le crochet de remorquage 18. Dans cette position, le mât 6 peut être pivoté sur un certain angle par rapport à l'axe longitudinal ou être disposé suivant cet axe pour remorquer un autre véhicule en panne, le mât étant alors fixé et soutenu par ses supports arrière 23.

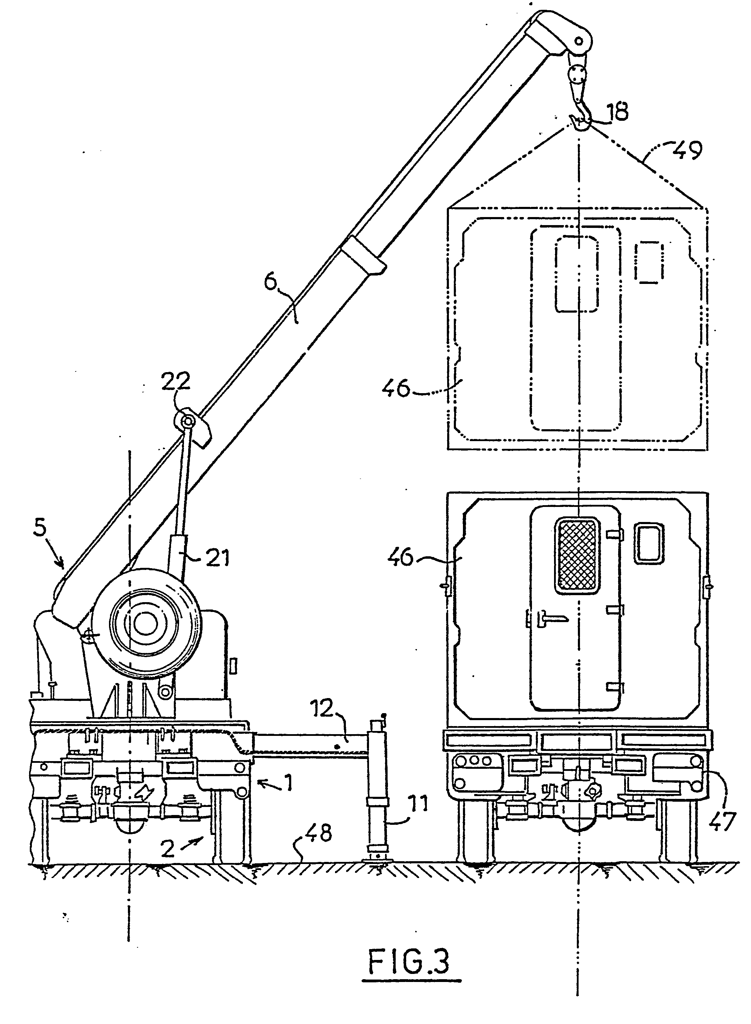

2) Lorsqu'on désire utiliser le véhicule selon l'invention pour des travaux de levage et de manutention (Fig. 2, position relevée du mât 6 dessinée en trait mixte, et Fig. 3), on relève le mât 6 par commande des vérins 21, et on le déploie à la longueur voulue par commande du vérin 16 d'extension et l'on fait pivoter le mât de la grue 5 sur le côté et en actionnant le treuil 20, on abaisse le crochet 18 au niveau de la partie supérieure d'une charge à manutentionner, telle qu'un conteneur 46 disposé, par exemple, sur un autre véhicule 47. Préalablement à l'opération proprement dite de levage de la charge, on stabilise le véhicule selon l'invention (à gauche sur la Fig. 3), portant la grue 5, en déployant latéralement les traverses télescopiques 12 et en commandant l'extension des pieds télescopiques verticaux 11, de manière que ces derniers reposent fermement sur le sol 48 en assurant un maintien plus stable du véhicule portant la grue, tout en permettant un moment de charge supérieur et une distance latérale de levage supérieure. une fois réglés ces pieds de stabilisation, on accroche la charge 46 au crochet 18 au moyen d'élingues 49 appropriées ou analogues et on la soulève sous l'action du treuil 20 commandé hydrauliquement à partir de la pompe à huile 40 d'une manière classique non représentée.

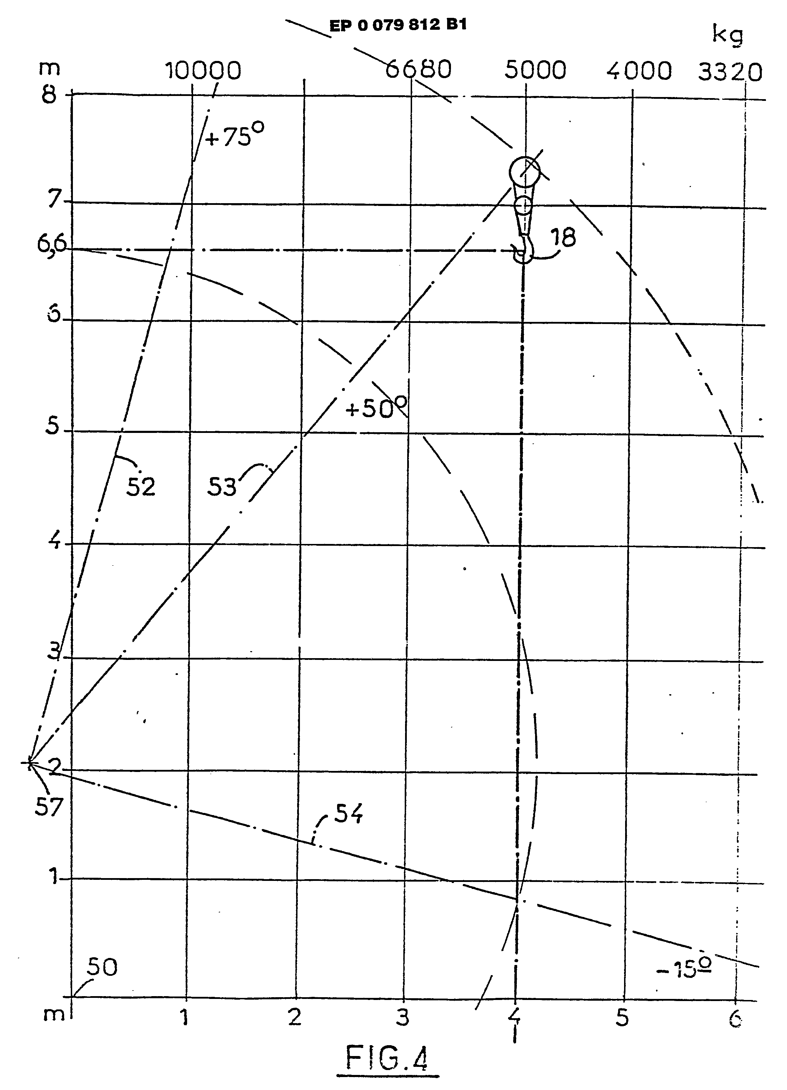

Sur la Fig. 4, on représenté un diagramme relatif aux performances de la grue 5 du véhicule selon l'invention, et sur lequel on peut lire directement la charge (en kg) pouvant être soulevée à une distance latérale donnée de l'axe longitudinal 50 du véhicule, pour une inclinaison donnée. Sur le diagramme, l'axe des abscisses est gradué en mètres et repère les distances par rapport à l'axe 50 du véhicule, au niveau du sol, tandis que l'axe des ordonnées gradué en mètres repère la hauteur de l'extrémité du mât 6 de la grue par rapport au sol. En outre, la référence 51 désigne l'axe de rotation du mât 6, dont on a représenté en trait mixte trois positions inclinées 52, 53, 54 correspondant aux angles respectifs de + 75°, + 50° et — 15° décomptés algébriquement par rapport à l'axe des abscisses. Ainsi, à titre d'exemple, le mât 6 déployé sur une longueur de 8 m peut soulever par son crochet 18 une charge de 5 tonnes à une distance latérale de 4 m et pour une hauteur de 6,6 m du crochet 18.

**Revendications**

1. Véhicule automobile tout terrain du type utilisable pour des opérations de remorquage et de manutention et comportant une plate-forme (4) située en arrière de la cabine (3) du conducteur, comportant une grue télescopique (5) à fonction mixte de levage/manutention de charges et de dépannage/ remorquage de véhicules, qui est réglable entre une première position horizontale rétractée de travail, dans laquelle elle sert d'engin de remorquage, et une seconde position relevée et déployée de travail, dans laquelle elle sert d'engin de manutention ; ladite grue (5) possédant un mât télescopique (6) qui, en position horizontale rétractée, s'étend uniquement sur la longueur de la plateforme (4) en ne dépassant cette dernière que par son extrémité arrière portant un moufle (17) à crochet (18) et qui est relevé au moyen de deux vérins de levage (21) latéraux couplés, caractérisé en ce que le mât (6) est monté sur un support de grue (7) monté à pivotement sur la plate-forme (4), en ce que les vérins de relevage (21) latéraux sont montés entre ledit support de grue (7) et une partie du mât (13), et en ce que, dans sa position horizontale rétractée, le mât (6) de la grue (5) prend appui, à son extrémité libre, sur deux supports latéraux (23) amovibles articulés sur le mât (6) et sur la plate-forme (4) et réglables en longueur.

2. Véhicule selon la revendication 1, caractérisé en ce que le mât télescopique est déployé au moyen d'un vérin (16) situé à l'intérieur du mât (6) et monté entre la partie du mât (13) rattachée au support et l'élément coulissant (14) d'extrémité du mât, portant le moufle (17).

3. Véhicule selon l'une des revendications 1 ou 2, caractérisé en ce que la commande de tous les vérins (16, 21) est réalisée à l'aide d'organes de commande situés au niveau d'un siège d'opérateur (8), solidaire du support de grue (7) et déclenchant l'alimentation des vérins (16, 21) à partir d'une pompe hydraulique (40) commandée par une prise de mouvement sur la sortie de la boîte de vitesses (45) du véhicule.

4. Véhicule selon l'une quelconque des revendications 1 à 3, caractérisé en ce qu'il est en outre prévu, pour le fonctionnement en engin de manutention de charges, des dispositifs de stabilisation latéraux en forme de pieds télescopiques verticaux (11) manœuvrables hydrauliquement par des leviers de commande indépendants (34) solidaires desdits pieds (11), à partir de la pompe hydraulique (40).

5. Véhicule selon l'ensemble des revendications 3 et 4, caractérisé en ce que les différents organes et leviers de commande (34) des vérins (16, 21) et des dispositifs de stabilisation (11, 21) sont reliés à la pompe hydraulique (40) par l'intermédiaire d'un ou de plusieurs distributeurs hydrauliques (39).

6. Véhicule selon la revendication 4, caractérisé en ce que les pieds télescopiques (11) comportent des vérins intérieurs (29) commandant leur réglage en position rétractée et déployée.

7. Véhicule selon l'une quelconque des revendications 4 à 6, caractérisé en ce que les pieds verticaux de stabilisation (11) sont fixés aux extrémités latérales de traverses horizontales télescopiques (12) réglables, pouvant être rétractées à l'intérieur de la structure de la plate-forme (4) du véhicule.

8. Véhicule selon l'une quelconque des revendications 1 à 7, caractérisé en ce qu'il est prévu un lest (38) formé d'une couche de béton insérée entre la plate-forme (4) et le châssis du véhicule (1), pour en parfaire la stabilité, notamment lorsque le mât (6) de la grue (5) est déployé.

**Claims**

1. Universal automotive land vehicle of the type utilisable for towing and handling operations and comprising a platform (4), situated behind the driver's cabin (3), comprising a telescopic crane (5) with the joint function of lifting/handling loads and recovering/towing vehicles, which crane is adjustable between a first retracted, horizontal working position, in which it serves as a towing means, and a second raised and extended working position, in which it serves as a handling means, said crane (5) having a telescopic jib (6) which, in its retracted, horizontal position, extends solely over the length of the platform (4) whilst only extending beyond the platform with its rear end which is provided with a pulley (17) and associated hook (18), the jib being raised by means of two lateral, coupled lifting jacks (21), characterised in that the jib (6) is mounted on a crane support (7) pivotally mounted on the platform (4), in that the lateral lifting jacks (21) are mounted between said crane support (7) and a jib portion (13), and in that, in its retracted, horizontal position the jib (6) of the crane (5) is supported at its free end, on two lateral, detachable supports (23), which are connected to the jib (6) and the platform (4) and are adjustable in length.

2. Vehicle according to claim 1, characterised in that the telescopic jib is extended by means of a jack (16) situated inside the jib (6) and mounted between the jib portion (13), which is connected to the support, and the sliding element (14) at the end of the jib provided with the pulley (17).

3. Vehicle according to one of claims 1 or 2, characterised in that all the jacks (16, 21) are controlled by control means situated at the level of an operator's seat (8), integral with the crane support (7) and for setting in motion the feeding of the jacks (16, 21) from a hydraulic pump (40) controlled by a movement acting on the output end of the gear box (45) of the vehicle.

4. Vehicle according to any of claims 1 to 3, characterised in that, to operate as load handling means, lateral stabilising members are additionally provided in the form of vertical telescopic feet (11) which are hydraulically manoeuvrable by independent control levers (34), which are integral with said feet (11), from the hydraulic pump (40).

5. Vehicle according to the combination of claims 3 and 4, characterised in that the various control members and levers (34) of the jacks (16, 21) and of the stabilising members (11, 21) are connected to the hydraulic pump (40) by means of one or more hydraulic feedpipes (39).

6. Vehicle according to claim 4, characterised in that the telescopic feet (11) comprise internal jacks (29) which control their adjustment into the retracted and extended positions.

7. Véhicle according to any of claims 4 to 6, characterised in that the vertical stabilising feet (11) are secured to the lateral ends of adjustable, horizontal, telescopic cross-piece members (12) which may be retracted inside the structure of the platform (4) of the vehicle.

8. Vehicle according to any of claims 1 to 7, characterised in that a ballast (38) is provided which is formed from a layer of concrete inserted between the platform (4) and the chassis of the vehicle (1), in order to achieve the stability thereof, especially when the jib (6) of the crane (5) is extended.

**Patentansprüche**

1. Geländegängiges Kraftfahrzeug des für Abschlepp- und Verladeoperationen verwendbaren Typs und das eine Plattform (4) aufweist, die hinter dem Führerhaus (3) angeordnet ist, das einen Teleskopkran (5) aufweist, mit gemischter Funktion von Hub-/Verladen von Lasten und von Reparaturhilfe/Abschleppen von Fahrzeugen, der zwischen einer ersten waagerechten, eingezogenen Arbeitslage, in der er als Abschleppmaschine dient, und einer zweiten aufgerichteten und ausgezogenen Arbeitslage, in der er als Verlademaschine dient, verstellbar ist, wobei der Kran (5) einen ausziehbaren Mast (6) hat, der sich in der waagerechten eingezogenen Lage bloß über die Länge der Plattform (4) erstreckt, wobei er diese letztere nur mit seinem hinteren Ende überschreitet, welches einen Flaschenzug (17) mit einem Hubhakan (18) trägt und der mittels zweier seitlich gekoppelter Hebevorrichtungen (21) aufrichtbar ist, dadurch gekennzeichnet, daß der Mast (6) auf einen Kranauflager (7) montiert ist, welches drehbar auf der Plattform (4) montiert ist, daß die seitlichen Hebevorrichtungen (21) zwischen dem Kranauflager (7) und einem Mastteil (13) montiert sind und daß der Mast (6) des Krans (5) in seiner waagerechten, eingezogenen Lage sich mit seinem freien Ende auf zwei seitlichen, beweglichen Stützen (23) abstützt, die gelenkig auf dem Mast (6) und der Plattform (4) gelagert und in der Länge verstellbar sind.

2. Fahrzeug gemäß Anspruch 1, dadurch gekennzeichnet, daß der ausziehbare Mast (6) mittels einer, im Inneren des Mastes (6) angeordneten und zwischen dem an dem Auflager befestigten Mastteil (13) und dem Verschiebeteil (14) des Mastendes, welches den Flaschenzug (17) trägt, montierten Hebevorrichtung (16) ausziehbar ist.

3. Fahrzeug gemäß einem der Ansprüche 1 oder 2, dadurch gekennzeichnet, daß der Antrieb sämtlicher Hebevorrichtungen (16, 21) mit Hilfe von Steuerorganen verwirklich ist, die auf der Höhe eines Bedienungsmannsitzes (8) angeordnet sind, die mit dem Kranauflager (7) fest verbunden sind und die Versorgung der Hebevorrichtungen (16, 21) auf der Grundlage einer hydraulischen Pumpe (40) auslösen, die von einer Antriebsabzweigung auf dem Ausgang des Getriebes (45) des Fahrzeuges angetrieben wird.

4. Fahrzeug gemäß irgendeinem der Ansprüche 1 bis 3, dadurch gekennzeichnet, daß es überdies für die Funktion als Maschine zum Verladen von Lasten mit seitlichen Stabilisierungseinrichtungen in Form vertikaler, ausfahrbarer Füße (11) versehen ist, die auf der Grundlage einer hydraulischen Pumpe (40) hydraulisch von unabhängigen Steuerhebeln (34), die mit den Füßen (11) fest verbunden sind, betätigbar sind.

5. Fahrzeug gemäß der Gesamtheit der Ansprüche 3 und 4, dadurch gekennzeichnet, daß die verschiedenen Organe und Steuerhebel (34) der Hebevorrichtungen (16, 21) und der Stabilisierungseinrichtungen (11, 21) mit einer hydraulischen Pumpe (40) über einen oder mehrere hydraulische Verteiler (39) verbunden sind.

6. Fahrzeug gemäß Anspruch 4, dadurch gekennzeichnet, daß die ausfahrbaren Füße (11) innere Hebevorrichtungen (29) enthalten, die ihre Einstellung in die eingezogene und die ausgefahrene Position steuern.

7. Fahrzeug gemäß irgendeinem der Ansprüche 4 bis 6, dadurch gekennzeichnet, daß die senkrechten Füße der Stabilisierung (11) an den seitlichen Enden von horizontalen, regulierbaren Teleskopquerträgern (12) befestigt sind, wobei sie in das Innere des Aufbaues der Plattform (4) des Fahrzeuges einziehbar sind.

8. Fahrzeug gemäß irgendeinem der Ansprüche 1 bis 7, dadurch gekennzeichnet, daß ein Ballast (38) vorgesehen ist, der von einer zwischen der Plattform (4) und dem Fahrzeuggestell (1) eingesetzten Betonschicht gebildet wird, um dessen Stabilität zu vervollkommnen, besonders wenn der Mast (6) des Kranes (5) ausgefahren ist.

FIG.1

EP 0 079 812 B1

FIG.2

EP 0 079 812 B1

FIG.3

EP 0 079 812 B1

FIG.4